# FASCICULE DE BREVET EUROPEEN

(11) **EP 2 291 638 B1**
(45) Date de publication et mention de la délivrance du brevet: **03.06.2015**
(21) Numéro de dépôt: 09784219.9
(22) Date de dépôt: 23.06.2009
(51) Int. Cl.: G01N 21/25, G01N 21/64, G01N 33/543

(54) **PROCÉDÉ ET DISPOSITIF DE DÉTECTION DE LA FLUORESCENCE D'UNE BIOPUCE**
VERFAHREN UND VORRICHTUNG ZUR ERKENNUNG DER FLUORESZENZ EINES BIOCHIPS
METHOD AND DEVICE FOR DETECTING FLUORESCENCE FROM A BIOCHIP

(30) Priorité: 24.06.2008 FR 0803528
(43) Date de publication de la demande: 09.03.2011
(73) Titulaire: Genewave, 91000 Evry (FR)
(72) Inventeur: MARTINELLI, Lucio, F-75002 Paris (FR); MARCY, Yann, F-75006 Paris (FR); BENISTY, Henri, F-91120 Palaiseau (FR)
(74) Mandataire: Coralis Harle
(86) Numéro de dépôt international: PCT/FR2009/000757
(87) Numéro de publication internationale: WO 2010/007233

(56) Documents cités:
- US-A1- 2002 086 329
- US-A1- 2002 097 899
- US-A1- 2003 157 581
- US-A1- 2003 157 586
- US-A1- 2004 132 128
- US-B1- 6 479 301
- US-B1- 6 608 918
- US-B1- 7 160 687

## Description

L'invention concerne un procédé et un dispositif de détection de la fluorescence d'une biopuce, et plus précisément d'imagerie et de détection de la fluorescence émise par des chromophores fixés sur un substrat de la biopuce.

Les biopuces sont largement utilisées aujourd'hui aussi bien pour la recherche que dans l'industrie. Elles comprennent essentiellement un substrat solide, en général plat, sur lequel on vient immobiliser des biomolécules telles que des brins d'ADN ou d'ARN, des protéines, des antigènes, des anticorps, des aptamers, etc... ou bien des microorganismes entiers ou fractionnés tels que des bactéries, des cellules, des virus, des spores etc..., ou encore des micro-objets portant eux-mêmes des biomolécules.

Les biopuces à fluorescence connues sont en général constituées d'une lame de verre dont la surface a été fonctionnalisée chimiquement et porte, après réaction avec des composants d'intérêt, des « spots » fluorescents qui, en réponse à une excitation lumineuse à une longueur d'onde donnée, émettent une lumière sur une autre longueur d'onde.

Cette lumière émise peut être collectée par une optique appropriée et transmise à un capteur par exemple à photodétecteurs du type CCD ou CMOS. L'image obtenue de la surface de la biopuce comporte des points lumineux dont les intensités sont fonction de la quantité de chromophores présents en ces points. Pour une bonne analyse des « spots », il faut disposer d'une image de ces spots présentant suffisamment de fidélité et de résolution.

Les chromophores qui sont placés à l'interface entre un milieu d'indice plus élevé et un milieu d'indice plus faible (typiquement une interface verre-air ou verre-liquide) vont préférentiellement émettre vers le milieu d'indice plus élevé dans un rapport égal (en première approximation) au cube du rapport des indices de réfraction des deux milieux, soit environ 4,1 dans le cas du verre et de l'air, ce qui signifie que, lorsque le capteur est placé au-dessus de la biopuce, 80% environ de l'émission lumineuse des chromophores est perdu dans la lame de verre.

En outre, les optiques utilisées ont une ouverture numérique limitée de sorte que seule une faible fraction de la lumière émise vers l'air peut être transmise au capteur. L'efficacité totale de collecte de la lumière émise par les chromophores est alors limitée à quelques pourcents.

Pour réduire ces inconvénients, on a déjà proposé de capter la lumière émise par les chromophores vers le milieu d'indice plus élevé. Dans ce contexte, la réalisation la plus simple consiste à utiliser le capteur lui-même comme substrat de la biopuce et donc à déposer sur la surface du capteur un réseau de sondes biologiques que l'on mettra ensuite en contact avec les molécules à analyser.

L'inconvénient de cette technique est son coût, car chaque analyse nécessite l'emploi d'un nouveau capteur.

Le document US 6, 479, 301B1 (voir les figures 1, 9-10A) divulgue un dispositif (un lecteur de microplaques) d'imagerie et de détection de la fluorescence émise par des chromophores fixés sur un substrat (microplaque -1A, 20) qui comprend un substrat (microplaque -1A) qui est transparent à l'émission des chromophores dans la direction vers le bas après une excitation optique d'un faisceau de lumière venant d'une source située au-dessus du substrat. Un filtre de réjection de la longueur d'onde d'excitation des chromophores est constitué soit par la porte de transfert de CCD, la plaque frontale à fibres optiques, une couche ou réseau 17 d'aluminium, soit par une couche diélectrique 18 interposée entre la microplaque (1A, 20) et une caméra CCD (10). La microplaque (1A, 20) est mise en contact optique avec la caméra CCD (10) au moyen d'une plaque frontale à fibres optiques pour la formation d'une image des chromophores sur la caméra CCD (10) d'une manière permettant de séparer le substrat du capteur après usage.

La présente invention a essentiellement pour but d'apporter une solution, simple, économique et efficace à l'ensemble de ces problèmes.

La présente demande concerne un procédé d'imagerie et de détection de la fluorescence émise par des chromophores fixés sur un substrat d'une biopuce, la détection consistant à éclairer les chromophores à une longueur d'onde d'excitation et à capter la lumière émise par les chromophores en réponse à cet éclairage. Le procédé consiste à utiliser un substrat au moins partiellement transparent à la longueur d'onde d'émission des chromophores et portant des sondes biologiques mises en contact avec des cibles biologiques recherchées, à mettre le substrat en contact optique avec un capteur, par exemple à matrice de photodétecteurs du type CCD ou CMOS ou à émulsion photosensible, en interposant entre les chromophores et le capteur un filtre de réjection de la longueur d'onde d'excitation, ce filtre étant transparent à la longueur d'onde d'émission, et en assurant éventuellement une continuité d'indice au moins partielle entre le substrat et le capteur, puis à éclairer le substrat à la longueur d'onde d'excitation des chromophores et à détecter au moyen du capteur les signaux lumineux émis par les chromophores.

Après acquisition de ces signaux lumineux, le capteur est réutilisable pour une autre analyse : il suffit de séparer le substrat du capteur et de le remplacer par un autre substrat.

L'acquisition des signaux lumineux des chromophores peut être faite « à sec » de façon traditionnelle, le substrat étant séché avant d'être posé sur le capteur.

On peut également interposer un ensemble de fibres optiques, se présentant sous forme d'un bloc ou d'une galette plate, entre le substrat et le capteur ou entre le substrat et le filtre.

Le procédé selon l'invention prévoit de poser et de fixer sur le substrat un dispositif fluidique comportant des canaux et/ou des chambres d'introduction ou de circulation de fluides, et d'utiliser ce dispositif pour amener des cibles biologiques en contact avec les sondes fixées sur le substrat.

Dans ce cas, l'ensemble formé par le dispositif fluidique et par le substrat peut être posé sur le capteur avant que les cibles biologiques soient mises en contact avec les sondes du substrat.

L'acquisition des images au moyen du capteur permet alors de suivre en temps réel les interactions entre les cibles et les sondes, par exemple par analyse de la forme et de l'intensité des spots.

La présente demande concerne également un dispositif d'imagerie et de détection de la fluorescence émise par des chromophores fixés sur un substrat d'une biopuce, l'imagerie et la détection étant réalisées par exécution du procédé décrit ci-dessus. Le dispositif comprend :
- un substrat au moins partiellement transparent à la longueur d'onde d'émission des chromophores,
- un filtre de réjection de la longueur d'onde d'excitation des chromophores,
- des moyens de détection et d'acquisition de la lumière émise par les chromophores en réponse à leur excitation lumineuse, ces moyens comprenant un capteur à matrice de photodétecteurs du type CCD ou CMOS par exemple ou à émulsion photosensible,
- et des moyens de mise en contact optique du substrat avec le capteur, pour la formation d'une image des chromophores sur le capteur et permettant de retirer le substrat du capteur après usage.

Le substrat comprend par exemple une plaque mince de verre ou de saphir, un film d'une matière plastique telle que du PDMS, du Mylar, du Zeonex, un filtre polariseur, un faisceau de fibres optiques ou un ensemble de tubes capillaires contenant les sondes.

En variante, le substrat peut être formé par le filtre de réjection de la longueur d'onde d'excitation.

Avantageusement, ce filtre comprend un filtre absorbant ou un filtre réfléchissant ou une combinaison de filtres absorbant et réfléchissant, notamment comme décrit dans la demande antérieure WO 200704575 de la déposante.

Des moyens peuvent être prévus pour assurer une continuité d'indice entre le substrat et le capteur et comprennent une couche mince de liquide ou de gel d'indice approprié ou de matière souple (par exemple en PDMS) reliant le substrat au capteur.

Selon l'invention, un dispositif fluidique comprenant des canaux et/ou des chambres d'introduction ou de circulation de fluides est destiné à être posé sur le substrat pour amener des cibles biologiques en contact avec des sondes fixées sur le substrat. Ce dispositif pourrait être réalisé en verre par gravure ou en polymère par moulage, par thermoformage ou par assemblage de films de polymère comportant des découpes correspondant aux canaux et/ou chambres précitées.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un dispositif de détection selon la divulgation,
- les figures 2, 3 et 4 représentent schématiquement différentes étapes de réalisation de ce dispositif ;
- la figure 5 est une vue schématique de dessus du dispositif de la figure 4 ;
- la figure 6 illustre l'utilisation de ce dispositif posé sur un capteur ;
- la figure 7 représente schématiquement l'image obtenue par le capteur du dispositif de la figure 6 ;
- la figure 8 est une vue schématique agrandie du halo flou qui entoure chaque point de l'image de la figure 7.

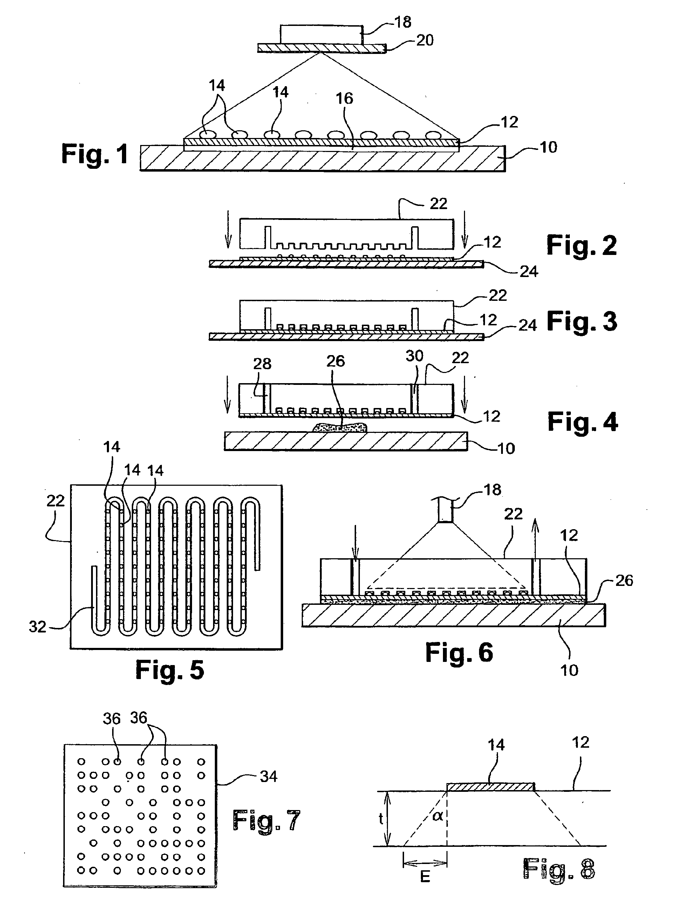

On se réfère d'abord à la figure 1, qui représente schématiquement un dispositif de détection, dans lequel la détection est faite « à sec ».

Ce dispositif comprend un capteur 10, par exemple du type matriciel à photodétecteurs CCD ou CMOS ou bien en variante, un support d'une émulsion photosensible, sur lequel on a déposé un substrat mince 12 portant sur sa surface supérieure une série de sondes biologiques 14 par exemple agencées en réseau.

Ces sondes ont été mises en contact avec des cibles biologiques d'intérêt, de façon classique, qui se sont fixées sur les sondes correspondantes, cette fixation étant mise en évidence par des marqueurs fluorescents. Après fixation des cibles sur les sondes 14, le substrat 12 est lavé, puis séché et ensuite posé sur le capteur 10 en étant positionné sur ce capteur de façon à bien imager toute la zone à analyser et avec interposition éventuelle d'une couche d'une matière telle qu'un liquide ou un gel ou un film souple, assurant une continuité d'indice au moins partielle entre le substrat 12 et le capteur 10.

L'éclairage du substrat 12 par une source lumineuse appropriée, telle par exemple qu'un générateur laser ou une diode électroluminescente 18 associée à un filtre 20, émettant sur une longueur d'onde d'excitation des marqueurs fluorescents, et placée au-dessus du substrat 12, permet d'acquérir une image de la zone comprenant les sondes 14, image que l'on analyse pour détecter et dénombrer les cibles biologiques fixées sur les sondes 14.

Il faut monter, entre les marqueurs fluorescents et le capteur 10, un filtre de réjection de la lumière d'excitation des marqueurs fluorescents, ce filtre ayant un taux de réjection de la longueur d'onde d'excitation d'au moins 10⁻⁵ et étant transparent au moins à une partie du spectre d'émission des marqueurs fluorescents.

Ce filtre de réjection peut constituer le substrat 12 lui-même ou être interposé entre ce substrat et le capteur 10. Il peut être constitué d'un filtre absorbant ou d'un filtre réfléchissant ou de leurs combinaisons, comme déjà décrit dans la demande antérieure WO 200704575 de la déposante. On peut par exemple placer un filtre réfléchissant sur le substrat 12 et un filtre absorbant sur le capteur 10. Cette combinaison permet de bénéficier d'une amplification de la lumière d'excitation des marqueurs fluorescents, par un effet d'interférence constructive, et également d'une amplification de la fluorescence émise par les marqueurs. Le filtre peut aussi être déposé sur un bloc ou une galette plate 16 de fibres optiques monté entre le substrat et le capteur.

Le substrat est au moins partiellement transparent aux longueurs d'onde du spectre d'émission des marqueurs fluorescents ou des chromophores précités. En pratique, le rapport de ses transmittances des longueurs d'onde d'émission et d'excitation des marqueurs ou chromophores est d'au moins 10⁵.

Après acquisition de l'image fournie par le capteur 10, le substrat 12 peut être séparé de ce capteur et remplacé par un autre substrat 12 pour une nouvelle acquisition d'image.

Le substrat peut être posé sur le capteur de la façon représentée au dessin, en étant en contact avec le capteur par sa face opposée à celle portant les marqueurs. En variante, c'est la face du substrat portant les marqueurs, qui peut être en contact avec le capteur.

Dans la variante de réalisation représentée aux figures 2 à 6, un dispositif fluidique est associé au substrat pour la mise en contact des cibles biologiques avec les sondes portées par le substrat.

Ce dispositif fluidique 22 comprend des canaux et/ou des chambres d'introduction et de circulation de fluides, ce dispositif étant réalisé en verre ou en polymère, par exemple par moulage, par thermoformage, ou par assemblage de films.

On peut en particulier couler dans un moule un polymère réticulable ou polymérisable par exemple du type PDMS (polydiméthylsiloxane) ou une colle optique NOA, le fond du moule comprenant une structure en relief correspondant aux canaux et/ou chambres que l'on veut obtenir. Le polymère est ensuite réticulé ou polymérisé au moins partiellement de façon à ce que le produit moulé ait une tenue suffisante pour sa manipulation. En variante, on peut former le dispositif 22 par un assemblage de films polymères dont certains ont été découpés, par exemple au laser, pour réaliser les canaux et/ou les chambres voulus.

Dans une autre variante, le dispositif 22 est réalisé par thermoformage d'un matériau polymère pressé sur un moule chauffé.

Comme représenté en figure 2, le dispositif 22 est ensuite placé sur un substrat 12 porté par un support 24, la face supérieure du substrat 12 portant un ensemble de sondes 14 comme déjà décrit en référence à la figure 1.

Lorsque le polymère du dispositif 22 n'a été que partiellement réticulé ou polymérisé lors du moulage de ce dispositif, on procède à une étape de réticulation ou de polymérisation finale de ce dispositif pour le fixer au substrat.

Dans les autres cas, si l'adhérence du polymère du dispositif 22 sur le substrat 12 n'est pas suffisante, on applique une couche de colle optique sur le dispositif 22 préalablement à sa pose sur le substrat 12 et on irradie avec un rayonnement ultraviolet lorsque la pose du dispositif sur le substrat est faite. En variante, on peut également utiliser une colle sensible à la pression.

On sépare ensuite l'ensemble dispositif 22-substrat 12 du support 24 et on pose cet ensemble sur un capteur 10 comme représenté en figure 4, la continuité au moins partielle d'indice entre le substrat et le capteur étant éventuellement assurée par une goutte 26 de liquide ou d'un gel d'indice approprié déposé sur le capteur 10, celui-ci pouvant être associé à un bloc ou une galette de fibres optiques, comme déjà décrit en référence à la figure 1.

Lorsque le substrat 12 est en matière souple, par exemple en PDMS ou lorsqu'il comprend une couche inférieure d'une telle matière souple, il suffit de l'application d'une pression pour assurer un contact optique entre le substrat 12 et le capteur 10.

Il faut ensuite alimenter le dispositif 22 en fluide et l'éclairer par une source lumineuse appropriée émettant sur la longueur d'onde d'excitation des marqueurs fluorescents et placée au-dessus du dispositif 22 comme représenté schématiquement en figure 6, pour suivre en temps réel les fixations des cibles biologiques sur les sondes du substrat.

Il faut également, comme décrit en référence à la figure 1, placer un filtre de réjection de la lumière d'excitation entre les sondes 14 et le capteur 10, ce filtre pouvant faire partie du substrat ou du capteur ou être ajouté à ces derniers, comme mentionné plus haut.

Dans l'exemple de réalisation représenté au dessin, le dispositif 22 comprend un conduit 28 d'amenée de liquide et un conduit 30 de sortie de liquide, qui sont formés sur toute son épaisseur et qui communiquent à leurs extrémités inférieures avec au moins un canal 32 formé en creux sur la face inférieure du dispositif 22 et qui est configuré pour passer sur toutes les sondes 14 portées par le substrat 12 (figure 5), ou avec un ensemble de canaux reliés entre eux et qui passent sur les sondes 14 du substrat 12. Il faut aligner le ou les canaux 32 avec les sondes 14, mais aucun alignement de ces canaux sur le capteur n'est nécessaire.

Le capteur permet d'obtenir une image du substrat 12 telle que celle 34 représentée schématiquement en figure 7, qui comprend un certain nombre de points lumineux 36 correspondant aux sondes 14 sur lesquelles sont fixées des molécules cibles associées à des marqueurs fluorescents. L'intensité lumineuse en chaque point 36 est une fonction du nombre de molécules cibles qui se sont fixées sur les sondes 14 en ce point.

On constate que chaque point lumineux 36 présente un halo flou, ce qui rend nécessaire l'utilisation d'algorithmes appropriés de traitement de l'image par filtration ou par segmentation. L'étendue E de ce halo flou autour de chaque point lumineux 36 est déterminée par le diagramme de rayonnement des chromophores ou marqueurs fluorescents utilisés. La forme du halo dépend aussi de la fonction de transfert optique du bloc ou de la galette de fibres optiques. On peut utiliser un bloc ou une galette de fibres présentant un étalement négligeable, de l'ordre de la distance entre les pixels du capteur.

Dans le cas d'un chromophore placé à une interface verre/air, l'émission est concentrée dans un cône d'environ 120° autour de la normale, avec un pic principal à 40° environ de la normale. Si t est l'épaisseur du substrat 12 et α l'angle d'émission, l'étendue E du halo flou est égale à tx tanα.

Dans le cas où le substrat 12 est une lamelle de verre ayant une épaisseur de 0,17 mm avec de l'air au-dessus, l'étendue E du halo est égale à 0,15 mm.

Pour limiter cette étendue et augmenter l'efficacité de collecte de la lumière (c'est-à-dire la quantité de lumière émise dans le substrat), il est souhaitable d'utiliser des substrats ayant un indice de réfraction le plus élevé possible ou un empilement de couches diélectriques du type miroir de Bragg, et cela d'autant plus lorsque les mesures sont effectuées en phase liquide, car l'indice de réfraction du milieu au-dessus du substrat 12 est alors égal à 1,3 environ au lieu de 1 pour l'air.

Le dispositif selon l'invention peut également être utilisé lorsque le phénomène observé pour la détection est la luminescence. Dans ce cas, les cibles sont liées à un substrat enzymatique qui émet des photons lorsqu'une espèce chimique réagissante est ajoutée.

## Revendications

1. Procédé d'imagerie et de détection de la fluorescence émise par des chromophores fixés sur un substrat, par éclairage de ces chromophores à une longueur d'onde d'excitation et captation de la lumière émise par les chromophores en réponse à cet éclairage, le substrat (12) étant au moins partiellement transparent à la longueur d'onde d'émission des chromophores, et portant des sondes biologiques (14) destinées à être mises en contact avec des cibles biologiques recherchées, comprenant les étapes suivantes:
- poser ou à fixer sur le substrat (12) un dispositif fluidique (22) comportant des canaux et/ou des chambres (28, 30, 32) d'introduction ou de circulation de fluides.
- mettre le substrat (12) portant le dispositif fluidique (22) en contact avec un capteur (10), par exemple à matrice de photodétecteurs du type CCD ou CMOS ou à émulsion photosensible, en interposant entre les chromophores et le capteur (10) un filtre de réjection de la longueur d'onde d'excitation, ce filtre étant transparent à la longueur d'onde d'émission,
- utiliser le dispositif fluidique (22) pour amener des cibles biologiques en contact avec les sondes (14) fixées sur le substrat (12),
- puis éclairer le substrat à la longueur d'onde d'excitation des chromophores et à détecter au moyen du capteur les signaux lumineux émis par les chromophores.

2. Procédé selon la revendication 1, **caractérisé en ce qu'**on assure une continuité d'indice au moins partielle entre le substrat (12) et le capteur (10).

3. Procédé selon la revendication 1 ou 2, **caractérisé en ce qu'**on transmet une image des sondes (14) au capteur au moyen d'un bloc ou d'une galette (16) de fibres optiques.

4. Procédé selon l'une des revendications précédentes, **caractérisé en ce que**, après acquisition des signaux lumineux émis par les chromophores, le capteur (10) est séparé du substrat (12) et est réutilisable avec un autre substrat.

5. Dispositif d'imagerie et de détection de la fluorescence émise par des chromophores fixés sur un substrat, par exécution du procédé selon l'une des revendications précédentes, comprenant un substrat (12) au moins partiellement transparent à la longueur d'onde d'émission des chromophores et des moyens d'imagerie, de détection et d'acquisition de la lumière émise par les chromophores en réponse à leur excitation lumineuse, ces moyens comprenant un capteur (10) du type à matrice de photodétecteurs CCD ou CMOS par exemple ou à émulsion photosensible, comprenant de plus:
- un dispositif fluidique (22) comprenant des canaux et/ou des chambres (28, 30, 32) d'introduction ou de circulation de fluide, posé ou fixé sur le substrat (12) pour amener des cibles biologiques en contact avec les sondes (14) fixées sur le substrat et posé avec le substrat sur le capteur (10),
- un filtre de réjection de la longueur d'onde d'excitation des chromophores, disposé entre les chromophores et le capteur (10),
- et des moyens de mise en contact optique du substrat (12) avec le capteur (10), pour la formation d'une image des chromophores sur le capteur et permettant de séparer le substrat du capteur après usage.

6. Dispositif selon la revendication 5, **caractérisé en ce que** le substrat comprend une plaque mince de verre ou de saphir, un film d'une matière plastique telle que du PDMS, du Mylar, du Zeonex, un filtre polariseur, un ensemble de fibres optiques ou un ensemble de tubes capillaires contenant les sondes.

7. Dispositif selon la revendication 5, **caractérisé en ce que** le substrat est formé par le filtre de réjection de la longueur d'onde d'excitation.

8. Dispositif selon l'une des revendications 5 à 7, **caractérisé en ce que** le filtre de réjection comprend un filtre absorbant ou un filtre réfléchissant ou une combinaison de filtres absorbant et réfléchissant.

9. Dispositif selon l'une des revendications 5 à 8, **caractérisé en ce qu'**il comprend des moyens assurant une continuité d'indice entre le substrat et le capteur, comprenant une couche mince de liquide ou de gel ou de matériau souple d'indice approprié reliant le substrat au capteur.

10. Dispositif selon l'une des revendications 5 à 9, caractérisé en ce le dispositif fluidique (22) est réalisé en verre par gravure ou en polymère par moulage, thermoformage ou assemblage de films de polymère comportant des découpes correspondant aux canaux et/ou aux chambres précitées.

## Patentansprüche

1. Verfahren zur Bilderzeugung und zur Detektion der von auf einem Substrat fixierten Chromophoren emittierten Fluoreszenz durch Beleuchten dieser Chromophoren mit einer Erregungswellenlänge und durch Erfassen des von den Chromophoren in Reaktion auf diese Beleuchtung emittierten Lichts, wobei das Substrat (12) für die Emissionswellenlänge der Chromophoren zumindest teilweise durchlässig ist und biologische Sonden (14) trägt, die vorgesehen sind, um mit den gesuchten biologischen Zielen in Kontakt gebracht zu werden, wobei das Verfahren die folgenden Schritte aufweist:
- Positionieren oder Fixieren einer Fluidvorrichtung (22) auf dem Substrat (12), welche Kanäle und/oder Kammern (28, 30, 32) für das Einleiten oder das Zirkulieren von Fluiden aufweist,
- Bringen des die Fluidvorrichtung (22) tragenden Substrats (12) in Kontakt mit einem Sensor (10), beispielsweise mit einer Matrix von Fotodetektoren vom Typ CCD oder CMOS oder mit einer fotoempfindlichen Emulsion, durch Zwischenfügen eines Sperrfilters für die Erregungswellenlänge zwischen die Chromophoren und den Sensor (10), wobei dieses Filter für die Emissionswellenlänge durchlässig ist,
- Verwenden der Fluidvorrichtung (22), um die biologischen Ziele in Kontakt mit den auf dem Substrat (12) befestigten Sonden (14) zu bringen,
- anschließendes Beleuchten des Substrats mit der Erregungswellenlänge der Chromophoren und Detektieren der von den Chromophoren emittierten Lichtsignale mittels des Sensors.

2. Verfahren nach Anspruch 1, **dadurch gekennzeichnet, dass** eine zumindest teilweise Indexkontinuität zwischen dem Substrat (12) und dem Sensor (10) sichergestellt wird.

3. Verfahren nach Anspruch 1 oder 2, **dadurch gekennzeichnet, dass** ein Bild der Sonden (14) an den Sensor mittels eines Blocks oder einer Platte (16) optischer Fasern übertragen wird.

4. Verfahren nach einem der vorhergehenden Ansprüche, **dadurch gekennzeichnet, dass** nach dem Erfassen der von den Chromophoren emittierten Lichtsignale der Sensor (10) von dem Substrat (12) getrennt wird und mit einem anderen Substrat wiederverwendbar ist.

5. Vorrichtung zur Bilderzeugung und zur Detektion der von auf einem Substrat fixierten Chromophoren emittierten Fluoreszenz durch Durchführen des Verfahrens nach einem der vorhergehenden Ansprüche, mit einem Substrat (12), das für die Emissionswellenlänge der Chromophoren zumindest teilweise durchlässig ist, und mit Einrichtungen zur Bilderzeugung, zur Detektion und zur Erfassung des von den Chromophoren in Reaktion auf ihre Lichtanregung emittierten Lichts, wobei diese Einrichtungen beispielsweise einen Sensor (10) vom Typ mit einer CCD- oder CMOS-Fotodetektormatrix oder mit einer fotoempfindlichen Emulsion aufweisen, wobei die Vorrichtung ferner aufweist:
- eine Fluidvorrichtung (22) mit Kanälen und/oder Kammern (28, 30, 32) für das Einleiten oder das Zirkulieren von Fluid aufweist, welche auf dem Substrat (12) platziert oder fixiert ist, um biologische Ziele in Kontakt mit den auf dem Substrat (12) befestigten Sonden (14) zu bewegen, und welche mit dem Substrat auf dem Sensor (10) platziert wird,
- ein Sperrfilter für die Erregungswellenlänge der Chromophoren, welcher zwischen den Chromophoren und dem Sensor (10) angeordnet ist,
- und Einrichtungen, welche das Substrat (12) in optischen Kontakt mit dem Sensor (10) bringen, um ein Bild der Chromophoren auf dem Sensor zu erzeugen und welche das Trennen des Substrats von dem Sensor nach Gebrauch ermöglichen.

6. Vorrichtung nach Anspruch 5, **dadurch gekennzeichnet, dass** das Substrat eine dünne Glas- oder Saphirplatte, einen Film aus Kunststoff wie PDMS, Mylar, Zeonex, ein Polarisationsfilter, eine Anordnung aus optischen Fasern oder eine Anordnung aus Kapillarröhrchen aufweist, welche Sonden enthalten.

7. Vorrichtung nach Anspruch 5, **dadurch gekennzeichnet, dass** das Substrat durch das Sperrfilter für die Erregungswelle gebildet ist.

8. Vorrichtung nach einem der Ansprüche 5 bis 7, **dadurch gekennzeichnet, dass** das Sperrfilter ein absorbierendes Filter oder ein reflektierendes Filter oder eine Kombination von absorbierenden und reflektierenden Filtern aufweist.

9. Vorrichtung nach einem der Ansprüche 5 bis 8, **dadurch gekennzeichnet, dass** sie Einrichtungen aufweist, welche eine Indexkontinuität zwischen dem Substrat und dem Sensor gewährleisten, mit einer dünnen Schicht aus einer Flüssigkeit oder einem Gel oder einem geeigneten flexiblen Indexmaterial, welche das Substrat mit den Sensor verbindet.

10. Vorrichtung nach einem der Ansprüche 5 bis 9, **dadurch gekennzeichnet, dass** die Fluidvorrichtung (22) durch Ätzen aus Glas oder aus Polymer durch Formen, Thermoformen oder Verbinden von Polymerfolien gebildet ist, welche den genannten Kanälen und/oder Kammern entsprechende Ausschnitte aufweisen.

## Claims

1. A method for imaging and detecting the fluorescence emitted by chromophores fixed on a substrate, by illumination of the chromophores at an excitation wavelength and by picking up the light emitted by the chromophores in response to said illumination, said substrate (12) being at least partially transparent at the emission wavelength of the chromophores and carrying biological probes (14) configured to be put into contact with looked-for biological targets, comprising the following steps:
- placing or fastening a fluid flow device (22) on the substrate (12), the fluid flow device having channels and/or chambers (28, 30, 32) for introducing or circulating fluids;
- putting the substrate (12) carrying the fluid flow device (22) into contact with a sensor (10), for example CCD or CMOS photodetectors array or of photosensitive emulsion type, while interposing a rejection filter between the chromophores and the sensor (10) to reject the excitation wavelength, the filter being transparent at the emission wavelength;
- using the fluid flow device (22) to bring biological targets into contact with the probes (14) fastened on the substrate (12); and
- illuminating the substrate at the excitation wavelength of the chromophores, and using the sensor to detect the light signals emitted by the chromophores.

2. A method according to claim 1, **characterized in that** at least partial index continuity is ensured between the substrate (12) and the sensor (10).

3. A method according to claim 1 or 2, **characterized in that** an image of the probes (14) is transmitted to the sensor by means of a block or wafer (16) of optical fibers.

4. A method according to any of the preceding claims, **characterized in that** once the light signals emitted by the chromophores have been acquired, the sensor (10) is separated from the substrate (12) and is reusable with another substrate.

5. A device for imaging and detecting the fluorescence emitted by chromophores fixed on a substrate, by executing the method according to any of the preceding claims, comprising a substrate (12) that is at least partially transparent at the emission wavelength of the chromophores and means for imaging, detecting and acquiring the light emitted by the chromophores in response to their light excitation, these means comprising a sensor (10), for example of CCD or CMOS photodetectors array type or of photosensitive emulsion type, comprising further:
- a fluid flow device (22) including channels and/or chambers (28, 30, 32) for introducing or circulating fluid, placed or fastened on the substrate (12) to bring biological targets into contact with the probes (14) fastened on the substrate and placed with the substrate onto the sensor (10);
- a rejection filter that rejects the excitation wavelength of the chromophores, mounted between the chromophores and the sensor (10); and
- means for putting the substrate (12) into optical contact with the sensor (10) to form an image of the chromophores on the sensor, and enabling the substrate to be separated from the sensor after it has been used.

6. A device according to claim 5, **characterized in that** the substrate comprises a thin plate of glass or sapphire, a film of a plastics material such as PDMS, Mylar or Zeonex, a polarizing filter, a set of optical fibers, or a set of capillary tubes containing the probes.

7. A device according to claim 5, **characterized in that** the substrate is formed by the rejection filter that rejects the excitation wavelength.

8. A device according to any of claims 5 to 7, **characterized in that** the rejection filter comprises an absorbent filter, or a reflective filter, or a combination of absorbent and reflective filters.

9. A device according to any of claims 5 to 8, **characterized in that** it includes means providing index continuity between the substrate and the sensor, said means comprising a thin layer of liquid or gel or flexible material of suitable index connecting the substrate to the sensor.

10. A device according to any of claims 5 to 9, **characterized in that** the fluid flow device (22) is made of glass by etching or of polymer by molding, thermoforming, or assembling polymer films that include cutouts corresponding to the above-mentioned channels and/or chambers.
